# EUROPEAN PATENT SPECIFICATION

(11) **EP 1 995 609 B1**
(45) Date of publication and mention of the grant of the patent: **27.03.2013**
(21) Application number: 07252123.0
(22) Date of filing: 23.05.2007
(51) Int. Cl.: G01V 1/24, G01V 1/22

(54) **Seismic data acquisition**
Seismische Datenerfassung
Acquisition de données sismiques

(43) Date of publication of application: 26.11.2008
(73) Proprietor: Sercel England Limited, Somercotes Alfreton Derbyshire DE55 4QQ (GB)
(72) Inventor: Wilcox, Steven William, Kinross KY13 8FG (GB); Whelan, John Christopher, Ayrshire KA20 3HL (GB); Alexander, Jonathan, co Vibration Tech Ltd., Central Park, Larbert FK5 4RU (GB)
(74) Representative: Cooper, John

(56) References cited:
- EP-A- 0 226 366
- WO-A-98/18022
- WO-A-2005/029131
- JP-A- 60 111 982

## Description

This invention relates to seismic surveying, and in particular to a method of acquiring seismic data, and to an acquisition unit and system for use with such a method.

In land seismic surveys, an array of geophones is used to detect reflections from subsurface earth formations of acoustic signals which are generated at, or near to, the surface of the earth. Geophysicists planning seismic surveys determine the positions where geophones are to be placed during a survey, normally on the earth's surface but commonly also in boreholes. These positions are known as stations, and one or more interconnected geophones may be placed at these stations. Such a collection of interconnected geophones is referred to as a geophone group, even if it consists of a single geophone.

The output of a geophone group is an analogue signal which is required to be digitized by a high-precision 24-bit analogue-to-digital converter to facilitate the high fidelity recording of the signal. As the geophone groups are typically distributed over a wide geographical area, it has become a common technique to deploy digitizer units containing between one and eight analogue-to-digital converters across the survey area, and to interconnect these digitizing units using cable to create a data transport network to transfer the digitized geophone signals to the data recorder.

Wireless systems have also come into use, as has the use of optical fibre cable to handle high data transfer rates. These developments, together with improved data processing, have allowed the use of larger seismic spreads and higher resolutions.

In our US 6219620 (= EP 0934538) there is described a seismic acquisition system in which the terrain is divided into cells, and digitizer units within each cell communicate with a cell controller by wireless techniques. The cell controllers then communicate with a central control unit by wireless or fibre optic cable. Such an arrangement greatly reduces the amount of work required to set up the seismic spread, and also allows a large amount of data to be processed virtually in real time. However, wireless systems may be disrupted by poor signal paths, by other wireless equipment operating in similar frequencies, and even by movement of vegetation or animals. Moreover, such disruption may occur intermittently in the course of a survey.

This is particularly a problem with digitizer units located near the edge of cells, or which are in locations having poor radio propagation due to terrain or vegetation cover. These are often subject to intermittent communication, which slows down the data acquisition process and in more severe cases may lead to data from that unit being lost.

EP-A-0 226 366 describes a seismic survey apparatus in which a seismic group recorder is connected to a group of seismic sensors. The recorder comprises a buffer and a non-volatile bulk memory. However, in this disclosure all data is recorded in the bulk memory for subsequent downloading, and the buffer is used only to buffer data into and out of the bulk memory.

The present invention seeks to overcome the above problems.

The invention provides a method of acquiring seismic data from an array of geophone groups, each geophone group comprising one or more geophones connected to an acquisition unit; the method comprising:
passing data from the geophone group to the acquisition unit;
converting said data, if in analogue form, into digital form;
holding said data in a buffer store in the acquisition unit; and
transmitting said data from the buffer store in the acquisition unit to a central control unit;
and in which the digital data is additionally stored in a bulk, non-volatile store in the acquisition unit.

From another aspect the invention provides an acquisition unit for use in seismic surveying, comprising:
input means for providing digitised geophone data to a temporary buffer;
transmission means for transmitting data from the buffer to a central control unit; and
a non-volatile bulk store connected to receive and store all digitised data provided by the input means.

A further aspect of the invention resides in a seismic data acquisition system comprising:
a plurality of acquisition units in accordance with the preceding paragraph;
a central control unit including a data recorder; and
a network interconnecting the central control unit and the acquisition units.

Preferred features and advantages of the invention will be apparent from the following description and claims.

An embodiment of the invention will now be described, by way of example only, with reference to the drawings, in which:
Figure 1 is a schematic overview of a seismic survey system;
Figure 2 shows part of the system in more detail; and
Figure 3 is a block diagram of one remote acquisition unit in the system.

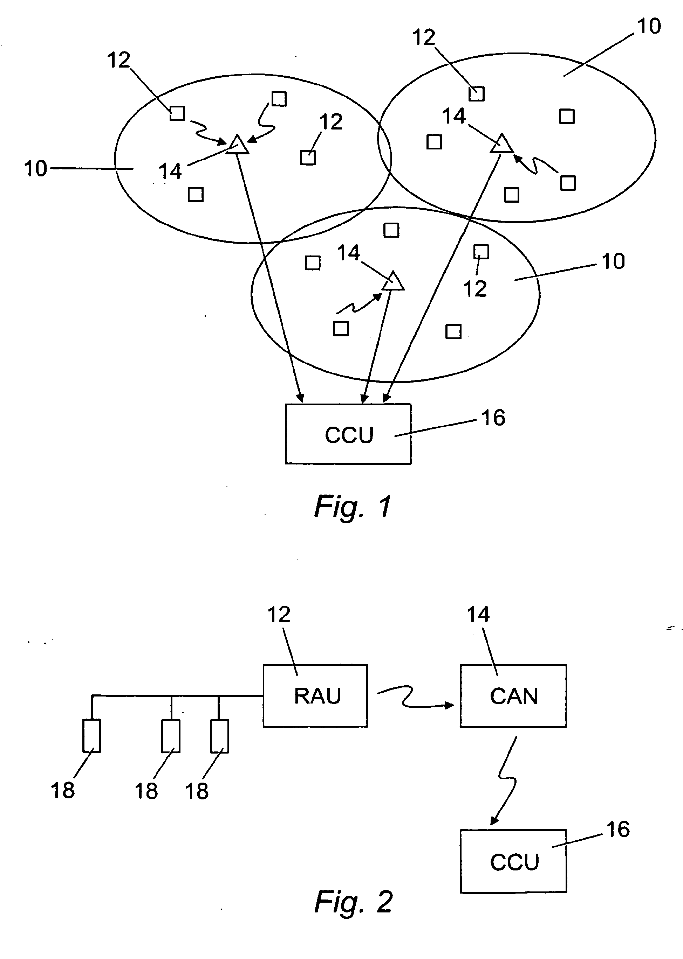

Referring to Figure 1, a seismic survey terrain is divided into a number of cells 10. Each cell 10 contains a number of remote acquisition units (RAUs) 12 which communicate by wireless techniques with a cell access node (CAN) 14. The CANs 14 in turn communicate with a central control unit (CCU) 16; this communication may be wireless or by means of a fibre optic backbone.

Turning to Figure 2, each of the RAUs 12 is connected to a single geophone group 18. Typically, the geophone signal is communicated in analog form to the RAU 12 and digitised within the RAU 12. Alternatively, the geophone 18 could be a digital geophone which transfers digital signals to the RAU by cable or by wireless. It is also possible for each geophone to be combined with its own RAU.

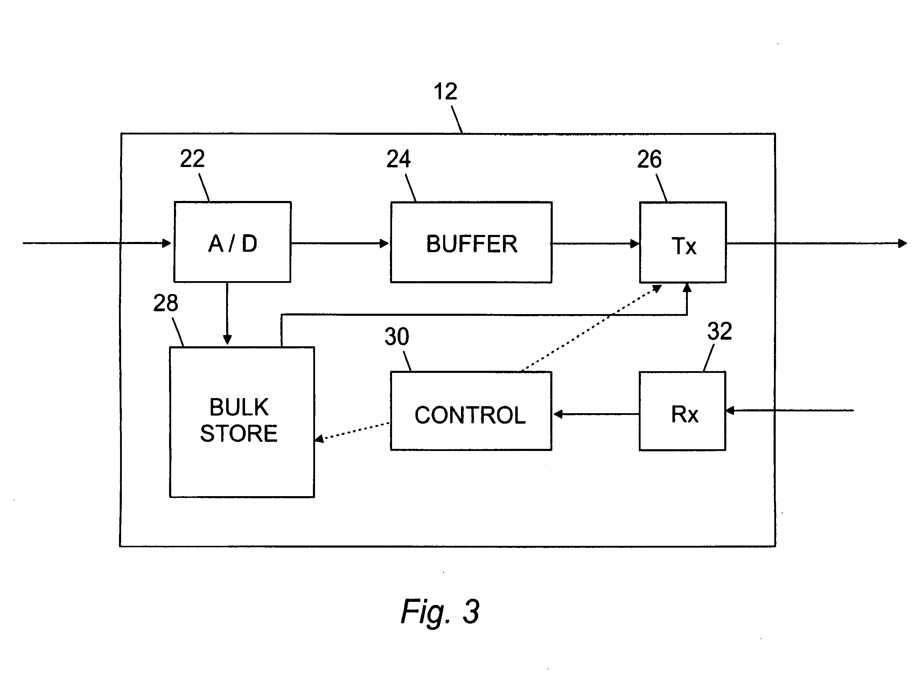

Figure 3 illustrates one RAU 12. Incoming geophone signals are digitised by A/D converter and passed to a buffer 24. The buffer 24 provides a limited amount of short term storage, and provides for the digital data to be formed into packets which are transmitted by transmitter 26 when the RAU 12 is polled by the CCU 16.

The digitised signals are also passed to a non-volatile, bulk data store 28 which may suitably be in the form of a NAND flash device or a micro hard disk device. All data from the A/D converter 22 is stored in the store 28 until the latter is full, after which the oldest data is erased and replaced by the newest data. A 2 Gbit NAND flash device, for example, would be able to store approximately 40 hours of continuously acquired data at a 2 ms sample interval.

The RAU 12 also comprises a control circuit 30 and a receiver 32. In normal operation, the control circuit 30 will receive polling commands via the receiver 32, and in response will cause the transmitter 26 to transmit the data packet held in the buffer 24 to the CAN 14 and thence to the CCU 16 for recording.

Data can be extracted from the non-volatile store 28 in a random-access manner at any time. Thus the RAU 12 can additionally operate in the following modes:
1. In the event of the radio signal fading, the RAU 12 can continue to store acquired data in the bulk data store 28until the radio connection is restored, at which time all outstanding data can be transferred.
2. In the event of a fault in the data network which causes data transmission between the RAU 12 and the CCU 16 to be subject to error or loss, the CCU 16 can at a later time instruct the RAU 12 to re-transmit the data. As all the data is still in the bulk store 28, the necessary data can be retrieved and re-transmitted.
3. In the event of a fault in the data network which causes data transmission between the RAU 12 and the CCU 16 to be subject to error or loss, the RAU 12 can re-transmit the data at a later time under its own control, when the RAU 12 detects that communications have been reestablished and the CCU 16 is ready to accept data. As all the data is still in the bulk store 28, the necessary data can be retrieved and re-transmitted.
4. In the event of the RAU 12 failing to establish contact after power-up and performing internal tests, or in the event of the RAU 12 permanently losing contact with the CCU 16, the RAU 12 is able to autonomously acquire and store data continuously without loss of any data (until the bulk store 28 is full).

In the case of 4 above, a portable, short range CAN with its own hard disk can be used to collect data from any RAU's affected in this way, the portable CAN being transported to the CCU 16 for uploading such data. Alternatively, the portable CAN may transmit the data to the CCU 16 by means independent of the main transmission network, for example by a point-to-point radio link; or by transporting the portable CAN to a location having good access to the main transmission network.

The invention has been described in terms of geophones which provide an analogue output which is subsequently digitized. It will be apparent that the invention may equally be used with geophones which each provide a direct digital output. Moreover, the term "geophone" is generally used to denote a sensor which principally senses displacement. Seismic sensors are also known which sense acceleration rather than displacement; the invention can equally be used with such accelerometer-type sensors, and the term "geophone" is used herein and in the claims to include such accelerometer-type sensors.

Although described with particular reference to a cellular wireless system, the invention may be applied to any seismic acquisition system which includes radio links.

## Claims

1. A method of acquiring seismic data from an array of geophone groups (18), each geophone group (18) comprising one or more geophones connected to an acquisition unit (12); the method comprising:
passing data from the geophone group (18) to the acquisition unit (12); converting said data, if in analogue form, into digital form in the acquisition unit (12);
holding said data in a buffer store (24) in the acquisition unit (12);
and
transmitting said data from the buffer store (24) in the acquisition unit (12) to a central control unit (16);
**characterised in that** the digital data is additionally stored in a bulk, non-volatile store (28) in the acquisition unit (12).

2. The method of claim 1, in which, in the event of failure or error in the data transmission network, the central control unit (16) causes selected data to be retrieved from the bulk store (28) and re-transmitted.

3. The method of claim 1, in which, in the event of non-establishment or loss of the data transmission network, data is retrieved locally from the acquisition unit (12) for transportation or independent forwarding to the central control unit (16).

4. An acquisition unit (12) for use in seismic surveying, comprising:
input means for providing digitised geophone data to a temporary buffer (24); and
transmission means (26) for transmitting data from the buffer (24) to a central control unit (16);
**characterised by** a non-volatile bulk store (28) connected to receive and store all digitised data provided by the input means.

5. An acquisition unit (12) according to claim 4, in which the input means comprises an analogue-to-digital converter for digitizing analogue data received from a geophone group (18).

6. An acquisition unit (12) according to claim 4 or claim 5, in which said bulk store (28) comprises a NAND flash memory or a mini hard disk.

7. An acquisition unit (12) according to any of claims 4 to 6, including control means (30, 32) responsive to commands from a central control unit (16) to retrieve selected data from the bulk memory and re-transmit the retrieved data.

8. A seismic data acquisition system comprising:
a plurality of acquisition units (12) in accordance with claim 4;
a central control unit (16) including a data recorder; and
a network interconnecting the central control unit (16) and the acquisition units (12).

9. A system according to claim 8, in which said network comprises a series of cells, the acquisition units (12) in each cell communicating wirelessly with a cell access node, and the cell access nodes communicating with the central control unit (16).

10. The system of claim 8 or claim 9, in which data is transmitted from the buffer (24) of each acquisition unit (12) in response to polling signals from the central control unit (16).

## Patentansprüche

1. Ein Verfahren zum Erfassen von seismischen Daten von einer Anordnung von Geofongruppen (18), wobei jede Geofongruppe (18) ein oder mehrere Geofone beinhaltet, die mit einer Erfassungseinheit (12) verbunden sind; wobei das Verfahren Folgendes beinhaltet:
Weitergeben von Daten von der Geofongruppe (18) an die Erfassungseinheit (12);
Umwandeln der Daten, falls in analoger Form, in digitale Form in der Erfassungseinheit (12);
Halten der Daten in einem Pufferspeicher (24) in der Erfassungseinheit (12);
und
Übertragen der Daten von dem Pufferspeicher (24) in der Erfassungseinheit (12) an eine zentrale Steuereinheit (16);
**dadurch gekennzeichnet, dass** die digitalen Daten außerdem in einem nichtflüchtigen Massenspeicher (28) in der Erfassungseinheit(12) gespeichert werden.

2. Verfahren gemäß Anspruch 1, bei dem im Fall einer Störung oder eines Fehlers im Datenübertragungsnetzwerk die zentrale Steuereinheit (16) bewirkt, dass selektierte Daten von dem Massenspeicher (28) abgerufen und erneut übertragen werden.

3. Verfahren gemäß Anspruch 1, bei dem im Fall einer Nichtherstellung oder eines Verlusts des Datenübertragungsnetzwerks Daten lokal von der Erfassungseinheit (12) für Transportierung oder unabhängige Weiterleitung an die zentrale Steuereinheit (16) abgerufen werden.

4. Eine Erfassungseinheit (12) für den Einsatz in seismischen Messungen, die Folgendes beinhaltet:
Eingabemittel zum Bereitstellen von digitalisierten Geofondaten an einen temporären Puffer (24); und
Übertragungsmittel (26) zum Übertragen von Daten von dem Puffer (24) an eine zentrale Steuereinheit (16);
**gekennzeichnet durch** einen nichtflüchtigen Massenspeicher (28), der verbunden ist,
um alle digitalisierten Daten, die **durch** das Eingabemittel bereitgestellt werden, zu empfangen und zu speichern.

5. Erfassungseinheit (12) gemäß Anspruch 4, bei der das Eingabemittel einen Analog-Digital-Wandler zum Digitalisieren von analogen Daten beinhaltet, die von einer Geofongruppe (18) empfangen werden.

6. Erfassungseinheit (12) gemäß Anspruch 4 oder Anspruch 5, bei der der Massenspeicher (28) einen NAND-Flash-Speicher oder eine Mini-Festplatte beinhaltet.

7. Erfassungseinheit (12) gemäß einem der Ansprüche 4 bis 6, die Steuermittel (30, 32) umfasst, die auf Befehle von einer zentralen Steuereinheit (16) reagieren, um selektierte Daten von dem Massenspeicher abzurufen und die abgerufenen Daten erneut zu übertragen.

8. Ein System zur seismischen Datenerfassung, das Folgendes beinhaltet:
eine Vielzahl von Erfassungseinheiten (12) gemäß Anspruch 4;
eine zentrale Steuereinheit (16), die einen Datenaufzeichner umfasst; und
ein Netzwerk, das die zentrale Steuereinheit (16) und die Erfassungseinheiten (12) untereinander verbindet.

9. System gemäß Anspruch 8, bei dem das Netzwerk eine Reihe von Zellen beinhaltet, wobei die Erfassungseinheiten (12) in jeder Zelle drahtlos mit einem Zellenzugangsknoten kommunizieren und die Zellenzugangsknoten mit der zentralen Steuerungseinheit (16) kommunizieren.

10. System gemäß Anspruch 8 oder Anspruch 9, bei dem Daten von dem Puffer (24) jeder Erfassungseinheit (12) in Reaktion auf Abfragesignale von der zentralen Steuerungseinheit (16) übertragen werden.

## Revendications

1. Une méthode pour acquérir des données sismiques provenant d'un arrangement de groupes de géophones (18), chaque groupe de géophones (18) comprenant un ou plusieurs géophones connectés à une unité d'acquisition (12) ; la méthode comprenant :
faire passer des données du groupe de géophones (18) à l'unité d'acquisition (12) ;
convertir lesdites données, si elles sont sous forme analogique, en forme numérique dans l'unité d'acquisition (12) ;
garder lesdites données dans une mémoire tampon (24) dans l'unité d'acquisition (12) ;
et
transmettre lesdites données de la mémoire tampon (24) dans l'unité d'acquisition (12) à une unité de commande centrale (16) ;
**caractérisée en ce que** les données numériques sont additionnellement mises en mémoire dans une mémoire de grande capacité non volatile (28) dans l'unité d'acquisition (12).

2. La méthode de la revendication 1, dans laquelle, en cas de défaillance ou d'erreur dans le réseau de transmission de données, l'unité de commande centrale (16) amènent des données sélectionnées à être récupérées de la mémoire de grande capacité (28) et à être retransmises.

3. La méthode de la revendication 1, dans laquelle, en cas de non établissement ou de perte du réseau de transmission de données, les données sont récupérées localement de l'unité d'acquisition (12) pour un transport ou renvoi indépendant vers l'unité de commande centrale (16).

4. Une unité d'acquisition (12) destinée à être utilisée prospection sismique, comprenant :
un moyen d'entrée destiné à fournir des données de géophone numérisées à un tampon temporaire (24) ; et
un moyen de transmission (26) destiné à transmettre des données du tampon (24) à une unité de commande centrale (16) ;
**caractérisée par** une mémoire non volatile de grande capacité (28) connectée pour recevoir et mettre en mémoire toutes les données numérisées fournies par le moyen d'entrée.

5. Une unité d'acquisition (12) selon la revendication 4, dans laquelle le moyen d'entrée comprend un convertisseur analogique-numérique destiné à numériser des données analogiques reçues d'un groupe de géophones (18).

6. Une unité d'acquisition (12) selon la revendication 4 ou la revendication 5, dans laquelle ladite mémoire de grande capacité (28) comprend une mémoire flash NAND ou un mini disque dur.

7. Une unité d'acquisition (12) selon n'importe lesquelles des revendications 4 à 6, incluant un moyen de commande (30, 32) réagissant à des instructions provenant d'une unité de commande centrale (16) pour récupérer des données sélectionnées de la mémoire de grande capacité et retransmettre les données récupérées.

8. Un système d'acquisition de données sismiques comprenant :
une pluralité d'unités d'acquisition (12) conformément à la revendication 4 ;
une unité de commande centrale (16) incluant un enregistreur de données ; et
un réseau interconnectant l'unité de commande centrale (16) et les unités d'acquisition (12).

9. Un système selon la revendication 8, dans lequel ledit réseau comprend une série de cellules, les unités d'acquisition (12) dans chaque cellule communiquant sans fil avec un noeud d'accès à la cellule, et les noeuds d'accès aux cellules communiquant avec l'unité de commande centrale (16).

10. Le système de la revendication 8 ou la revendication 9, dans lequel les données sont transmises depuis le tampon (24) de chaque unité d'acquisition (12) en réponse à des signaux d'invitation à émettre provenant de l'unité de commande centrale (16).
